# EUROPÄISCHE PATENTSCHRIFT

(11) **EP 0 782 946 B1**
(45) Veröffentlichungstag und Bekanntmachung des Hinweises auf die Patenterteilung: **08.12.1999**
(21) Anmeldenummer: 96117330.9
(22) Anmeldetag: 29.10.1996
(51) Int. Cl.: B60S 1/60

(54) **Scheibenreinigungsanlage**
Windshield cleaning device
Essuie-glace

(30) Priorität: 08.01.1996 DE 19600360
(43) Veröffentlichungstag der Anmeldung: 09.07.1997
(73) Patentinhaber: Mannesmann VDO AG, 60326 Frankfurt (DE)
(72) Erfinder: Horn, Martin, 36199 Rotenburg (DE)
(74) Vertreter: Klein, Thomas, Dipl.-Ing.

(56) Entgegenhaltungen:
- DE-A- 2 949 574
- DE-A- 4 139 584

## Beschreibung

Die Erfindung betrifft eine Scheibenreinigungsanlage mit einer Waschflüssigkeit aus einem Waschflüssigkeitsbehälter zu zumindest zwei Spritzdüsen fördernden Waschflüssigkeitspumpe und einem Ventil, welches zum Umschalten der Verbindung der Waschflüssigkeitspumpe mit den Spritzdüsen ausgebildet ist.

Solche Scheibenreinigungsanlagen werden vielfach in heutigen Kraftfahrzeugen beispielsweise zur Reinigung von Scheinwerfergläsern eingesetzt und sind damit bekannt. Dabei ist jedem Scheinwerferglas eine Spritzdüse zugeordnet, so daß die Scheinwerfergläser abwechselnd mit Waschflüssigkeit besprüht werden. Ein gleichzeitiges Besprühen der Scheinwerfergläser mit Waschflüssigkeit hat sich als nachteilig herausgestellt, da während des Reinigungsvorganges die Lichtabstrahlung gestört wird. Weiterhin muß die Pumpleistung einer solchen Scheibenreinigungsanlage für alle Spritzdüsen bemessen sein, durch die gleichzeitig Waschflüssigkeit spritzen soll.

Wenn Spritzdüsen nacheinander mit Waschflüssigkeit versorgt werden sollen, dann ist es bekannt, hierzu den Elektromotor zum Antrieb der Waschflüssigkeitspumpe in beide Richtungen auszubilden. Einer solchen Waschflüssigkeitspumpe vor- und nachgeschaltete Rückschlagventile sorgen dann für eine abwechselnde Versorgung der Spritzdüsen mit Waschflüssigkeit. Nachteilig ist hierbei die hohe Stromaufnahme des Elektromotors bei jedem Start, der die Stromversorgung in dem Kraftfahrzeug unnötig belastet. Weiterhin ist eine derartige Waschflüssigkeitspumpe teuer und benötigt eine elektronische Ansteuerung. Denkbar wäre auch, hinter der Waschflüssigkeitspumpe ein elektrisch umschaltbares Zweiwegeventil anzuordnen. Dies erfordert jedoch einen beträchtlichen steuerungstechnischen Aufwand.

Eine Scheibenwaschanlage mit einem solchen elektrisch umschaltbaren 2-Wege-Ventil ist aus DE 2 949 574 A1 bekannt. Das Zweiwege-Ventil gemäß DE 2 949 574 A1 ist ein Magnetventil mit einem Einlaß und zwei Auslässen, das von einer Steuereinheit gesteuert wird, so daß periodisch zwischen dem ersten und dem zweiten Auslaß umgeschaltet wird. Die Steuereinheit umfaßt einen integrierten Schaltkreis mit einer Vielzahl von elektrischen Bauelementen.

Der Erfindung liegt das Problem zugrunde, eine Scheibenreinigungsanlage der eingangs genannten Art so zu gestalten, daß mit ihr ohne aufwendige elektronische Steuerung oder unerwünscht hohen Energiebedarf die Spritzdüsen nacheinander mit Waschflüssigkeit versorgt werden.

Dieses Problem wird erfindungsgemäß dadurch gelöst, daß das Ventil einen mittels des Druckes der Waschflüssigkeitspumpe gesteuerten Steuerkolben mit einem Schieber umfaßt, der im Bereich von zu den Spritzdüsen führenden Auslässen eine Bohrung hat, die sich in Abhängigkeit von der Position des Steuerkolbens an den Auslässen des Ventils vorbeibewegt und dabei nacheinander Verbindungen der Spritzdüsen mit der Waschflüssigkeitspumpe herstellt.

Die erfindungsgemäße Scheibenwaschanlage hat also ein Ventil mit einem druckgesteuerten Steuerkolben und einen damit verbundenen Schieber, welcher im Bereich der Auslasse des Ventils eine Bohrung aufweist. Hierdurch lassen sich zwei und mehr Spritzdüsen nacheinander mit der Waschflüssigkeitspumpe verbinden.

Durch diese Gestaltung ist für das Umschalten des Ventils keine elektrische Energie erforderlich. Durch das Fehler einer elektrischen Ventilbetätigung entfällt die Notwendigkeit, zu dem Ventil elektrische Leitungen zu verlegen. Weiterhin ist keine elektronische Ventilsteuerung notwendig. Insgesamt ist die erfindungsgemäße Scheibenreinigungsanlage aufgrund ihres einfachen Aufbaus kostengünstig herzustellen und vermag zuverlässig zu arbeiten.

Das selbsttätige, zeitabhängige Umschalten des Ventils durch den Druck der Waschflüssigkeitspumpe läßt sich einfach dadurch erreichen, daß das Ventil einen einen ersten Druckraum von einem zweiten Druckraum trennenden Steuerkolben und eine Ausgleichsdrossel hat, wobei die Waschflüssigkeitspumpe mit dem ersten Druckraum und der zweite Druckraum über die Ausgleichsdrossel mit einem drucklosen Raum verbunden ist, und daß das Ventil Mittel zum wechselnden Verbinden der Spritzdüsen mit der Waschflüssigkeitspumpe in Abhängigkeit von der Position des Steuerkolbens hat. In dem ersten Druckraum baut sich ein Druck der Waschflüssigkeitspumpe auf, der größer ist als in dem zweiten Druckraum. Der Steuerkolben bewegt sich damit, angetrieben vom Druck der Waschflüssigkeitspumpe, in Richtung des zweiten Druckraums und erzeugt dort einen Gegendruck, der sich langsam über die Ausgleichsdrossel zum Waschflüssgkeitsbehälter hin abbaut. Durch diese Gestaltung des Ventils wird eine einfache zeitabhängige Bewegung des Steuerkolbens erreicht.

Fertigungstoleranzen oder eine veränderliche Viskosität der Waschflüssigkeit bei unterschiedlichen Temperaturen können dazu führen, daß sich der Steuerkolben zu schnell oder zu langsam bewegt. Die Geschwindigkeit der Bewegung des Steuerkolbens läßt sich einfach verändern, wenn die Ausgleichsdrossel einstellbar ist.

Der zweite Druckraum könnte mit Luft gefüllt sein und die Ausgleichsdrossel eine Verbindung mit der Umgebungsluft haben. Nachteilig ist hierbei daß die Luft kompressibel ist, was eine ungleichförmige Bewegung des Steuerkolbens zur Folge hätte. Weiterhin erfordert dies hohe Anforderungen an eine Abdichtung des Steuerkolbens, und es besteht die Gefahr der Verschmutzung der Ausgleichsdrossel. Besonders zuverlässig arbeitet die Scheibenwaschanlage trotz einfacher Gestaltung, wenn der zweite Druckraum mit Waschflüssigkeit gefüllt ist und die Ausgleichsdrossel eine ständige Verbindung mit der Waschflüssigkeit im Waschflüssigkeitsbehälter hat. Leckverluste am Steuerkolben werden hierbei in den Waschflüssigkeitsbehälter zurückgeleitet.

Der Steuerkolben bewegt sich bei abgeschalteter Waschflüssigkeitspumpe selbsttätig wieder in seine Ausgangsposition zurück, wenn der Steuerkolben gemäß einer vorteilhaften Weiterbildung der Erfindung in einer Ruhestellung des Ventils von einer Feder in einer den ersten Druckraum beschränkenden Endposition gehalten ist. Der Steuerkolben saugt während seiner Bewegung in die Ruhestellung Waschflüssigkeit aus dem Waschflüssigkeitsbehälter in den zweiten Druckraum. Die Ausgleichsdrossel wird dadurch in umgekehrter Richtung von Waschflüssigkeit durchströmt.

Die Federkraft darf nicht zu groß sein, damit die Bewegung des Steuerkolbens durch den Druck der Waschflüssigkeitspumpe nicht behindert wird. Die Federkraft läßt sich gemäß einer anderen vorteilhaften Weiterbildung der Erfindung dadurch einstellen, daß die Länge der Feder mit einer Justierschraube verstellbar ist.

Das Ansaugen von Waschflüssigkeit in den zweiten Druckraum nach einem Abschalten der Waschflüssigkeitspumpe wird erleichtert, wenn der erste Druckraum mit dem zweiten Druckraum über eine Drossel verbunden ist.

Die Drosselwirkung in der Verbindung der Druckräume wird gemäß einer vorteilhaften Weiterbildung der Erfindung sehr einfach erzeugt, wenn die Drossel von einem den Steuerkolben umschließenden Ringspalt gebildet ist.

Beim Umschalten des Ventils von einer Spritzdüse auf eine andere wird ein Druckabfall im Ventil verhindert, wenn das Ventil in einer Mittelstellung zum gleichzeitigen Versperren der zu den Spritzdüsen führenden Auslässen ausgebildet ist. Ein solcher Druckabfall würde ein Verharren des Steuerkolbens in der Mittelstellung zur Folge haben.

Die Erfindung läßt zahlreiche Ausführungsformen zu. Zur weiteren Verdeutlichung ihres Grundprinzips sind zwei davon in der Zeichnung dargestellt und werden nachfolgend beschrieben. Diese zeigt in
- Fig.1: eine schematische Darstellung einer erfindungsgemäßen Scheibenreinigungsanlage,
- Fig.2: eine Schnittdarstellung durch ein Ventil in einer Ruhestellung.

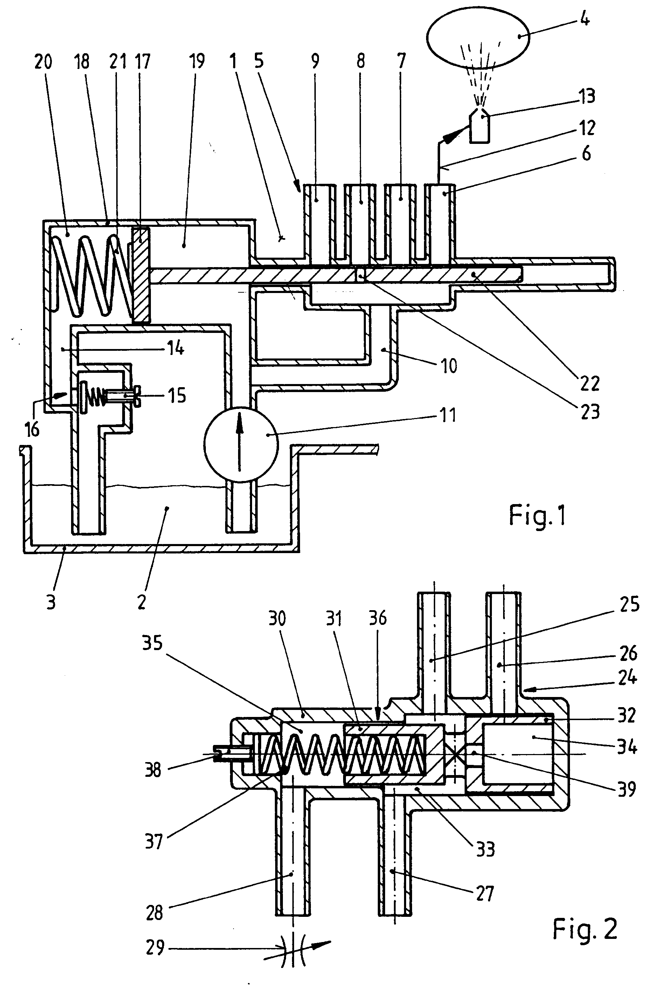

Die Figur 1 zeigt eine Scheibenreinigungsanlage 1, bei der Waschflüssigkeit 2 aus einem Waschflüssigkeitsbehälter 3 auf mehrere Scheinwerfergläser 4 gespritzt wird. Die Scheibenreinigungsanlage 1 hat ein Ventil 5 mit vier Auslässen 6 - 9 und einen Einlaß 10. Vor dem Einlaß 10 ist eine Waschflüssigkeitspumpe 11 angeordnet. Die Waschflüssigkeitspumpe 11 taucht in die Waschflüssigkeit 2 ein. Die Auslässe 6 - 9 des Ventils 5 haben jeweils eine Leitung 12 zu einer vor dem Scheinwerferglas 4 angeordneten Spritzdüse 13. Zur Vereinfachung ist in der Zeichnung eine einzige Spritzdüse 13 und ein Scheinwerferglas 4 eingezeichnet. Von dem Ventil 5 führt eine Ausgleichsleitung 14 in den Waschflüssigkeitsbehälter 3. Die Ausgleichsleitung 14 endet unterhalb der Oberfläche der Waschflüssigkeit 2. In der Ausgleichsleitung 14 ist eine mit einer Einstellschraube 15 verstellbare Ausgleichsdrossel 16 angeordnet. Die Einstellschraube 15 der Ausgleichsdrossel 16 dient der Einstellung eines Drucks in dem zweiten Druckraum 20.

Das Ventil hat einen Steuerkolben 17, der in einem Zylinder 18 axial verschieblich gehalten ist. Der Steuerkolben 17 teilt den Zylinder 18 in einen ersten Druckraum 19 und einen zweiten Druckraum 20. In dem zweiten Druckraum 20 ist eine Druckfeder 21 angeordnet. An dem Steuerkolben 17 ist ein Schieber 22 befestigt, welcher im Bereich der Auslässe 6 - 9 eine Bohrung 23 hat.

Die Waschflüssigkeitspumpe 11 baut einen Druck in dem ersten Druckraum 19 auf, wodurch sich der Steuerkolben 17 zusammen mit dem Schieber 22 nach links bewegt. Die Bohrung 23 im Schieber 22 bewegt sich an den Auslässen 6 - 9 des Ventils 5 vorbei und stellt somit nacheinander Verbindungen der Spritzdüsen 13 mit der Waschflüssigkeitspumpe 11 her. Da sich der Schieber 22 mit konstanter Geschwindigkeit bewegt, kann über die Breite der Auslässe 6 - 9 die Spritzdauer der einzelnen Spritzdüsen 13 festgelegt werden. Wichtig ist hierbei, daß die Bohrung 23 so klein ist, daß zu keinem Zeitpunkt in zwei Auslässe 6 - 9 gleichzeitig Waschflüssigkeit gefördert wird. Nach dem Abschalten der Waschflüssigkeitspumpe 11 drückt die Druckfeder 21 den Steuerkolben 17 nach rechts in eine Ruhestellung. Dabei saugt der Steuerkolben 17 Waschflüssigkeit 2 in den zweiten Druckraum 20 an.

Figur 2 zeigt ein Ventil 24 mit zwei Auslässen 25, 26, einem Einlaß 27 und einer Ausgleichsleitung 28, welche zu einer Ausgleichsdrossel 29 führt. Im Innern des Ventils 24 ist in einem Zylinder 30 axial verschieblich ein Steuerkolben 31 angeordnet, der mit einem zylindrischen Schieber 32 verbunden ist. Der Steuerkolben 31 trennt einen mit einem Ringraum 33 verbundenen ersten Druckraum 34 von einem zweiten Druckraum 35. Der Steuerkolben 31 dichtet gegenüber dem Zylinder 30 nicht vollständig ab, vielmehr ist hier ein Ringspalt 36 vorhanden. Eine Druckfeder 37 spannt den Steuerkolben 31 in die eingezeichnete Stellung vor. Diese Stellung kennzeichnet die Ruhestellung. Zur Einstellung der Federkraft hat die Druckfeder 37 an seinem dem Steuerkolben 31 abgewandten Ende eine Justierschraube 38.

Waschflüssigkeit 2, welche von der in Figur 1 dargestellten Waschflüssigkeitspumpe 11 in den Einlaß 27 gefördert wird, gelangt zunächst über den Ringraum 33 des Ventils 24 zu dem ersten Auslaß 25. Der Ringraum 33 hat über eine Bohrung 39 im Schieber 32 eine Verbindung mit dem ersten Druckraum 34. Hier baut sich anschließend ein Druck auf, der den Steuerkolben 31 nach links schiebt. Gleichzeitig gelangt eine geringe Menge Waschflüssigkeit 2 durch den Ringspalt 36 in den zweiten Druckraum 35. Dieser Ringspalt 36 erleichtert einen Druckausgleich im zweiten Druckraum 35, wenn sich der Steuerkolben 31 durch die Kraft der Feder 37 wieder in die Ruhestellung bewegt.

## Patentansprüche

1. Scheibenreinigungsanlage (1) mit einer Waschflüssigkeit aus einem Waschflüssigkeitsbehälter (3) zu zumindest zwei Spritzdüsen (13) fördernden Waschflüssigkeitspumpe (11) und mit einem Ventil, welches (5, 24) zum selbsttätigen, zeitabhängigen Umschalten der Verbindung der Waschflüssigkeitspumpe (11) von einer Spritzdüse auf eine andere Spritzdüse ausgebildet ist, **dadurch gekennzeichnet**, daß das Ventil (5, 24) einen mittels des Druckes der Waschflüssigkeitspumpe (11) gesteuerten Steuerkolben (17, 31) mit einem Schieber (22, 32) umfaßt, der im Bereich von zu den Spritzdüsen (13) führenden Auslässen (6 - 9, 25, 26) eine Bohrung (23, 39) hat, die sich in Abhängigkeit von der Position des Steuerkolbens (17, 31) an den Auslässen (6 - 9, 25, 26) des Ventils (5, 24) vorbeibewegt und dabei nacheinander Verbindungen der Spritzdüsen (13) mit der Waschflüssigkeitspumpe (11) herstellt.

2. Scheibenreinigungsanlage nach Anspruch 1, **dadurch gekennzeichnet**, daß in dem Ventil (5, 24) der Steuerkolben (17, 31) einen ersten Druckraum (19, 34) von einem zweiten Druckraum (20, 35) trennt und eine Ausgleichsdrossel (16, 29) angeordnet ist, wobei die Waschflüssigkeitspumpe (11) mit dem ersten Druckraum (19, 34) und der zweite Druckraum (20, 35) über die Ausgleichsdrossel (16, 29) mit einem drucklosen Raum (Waschflüssigkeitsbehälter 3) verbunden ist.

3. Scheibenreinigungsanlage nach Anspruch 2, **dadurch gekennzeichnet**, daß die Ausgleichsdrossel (16, 29) einstellbar ist.

4. Scheibenreinigungsanlage nach zumindest einem der vorhergehenden Ansprüche, **dadurch gekennzeichnet**, daß der zweite Druckraum (20, 35) mit Waschflüssigkeit (2) gefüllt ist und die Ausgleichsdrossel (16, 29) eine ständige Verbindung mit der Waschflüssigkeit (2) im Waschflüssigkeitsbehälter (3) hat.

5. Scheibenreinigungsanlage nach zumindest einem der vorhergehenden Ansprüche**, dadurch gekennzeichnet**, daß der Steuerkolben (17, 31) in einer Ruhestellung des Ventils (5, 24) von einer Feder (Druckfeder 21, 37) in einer den ersten Druckraum (19, 34) beschränkenden Endposition gehalten ist.

6. Scheibenreinigungsanlage nach Anspruch 5, **dadurch gekennzeichnet**, daß die Länge der Feder (Druckfeder 21, 37) mit einer Justierschraube (38) verstellbar ist.

7. Scheibenreinigungsanlage nach zumindest einem der vorhergehenden Ansprüche, **dadurch gekennzeichnet**, daß der erste Druckraum (19, 34) mit dem zweiten Druckraum (20, 35) über eine Drossel (Ringspalt 36) verbunden ist.

8. Scheibenreinigungsanlage nach Anspruch 7, **dadurch gekennzeichnet**, daß die Drossel von einem den Steuerkolben (17, 31) umschließenden Ringspalt (36) gebildet ist.

9. Scheibenreinigungsanlage nach zumindest einem der vorhergehenden Ansprüche, **dadurch gekennzeichnet**, daß das Ventil (5, 24) in einer Mittelstellung zum gleichzeitigen Versperren der zu den Spritzdüsen (13) führenden Anschlüsse ( 6 - 9, 25, 26) ausgebildet ist.

## Claims

1. Headlight glass cleaning system (1) with a washing fluid pump (11) conveying washing fluid out of a washing fluid container (3) to at least spray nozzles (13), and with a valve (5, 24) which is designed with automatic time-dependent change-over of the connection of the washing fluid pump (11) from one spray nozzle to another spray nozzle, characterized in that the valve (5, 24) comprises a control piston (17, 31) controlled by means of the pressure of the washing fluid pump (11) and having a slide (22, 32) which, in the region of outlets (6 - 9, 25, 26) leading to the spray nozzles (13), has a bore (23, 39) which moves past the outlets (6 - 9, 25, 26) of the valve (5, 24) as a function of the position of the control piston (17, 31) and at the same time successively makes connections of the spray nozzles (13) to the washing fluid pump (11).

2. Headlight glass cleaning system according to Claim 1, characterized in that, in the valve (5, 24), the control piston (17, 31) separates a first pressure space (19, 34) from a second pressure space (20, 35) and an equalizing throttle (16, 29) is arranged, the washing fluid pump (11) being connected to the first pressure space (19, 34), and the second pressure space (20, 35) being connected, via the equalizing throttle (16, 29), to a pressureless space (washing fluid container 3).

3. Headlight glass cleaning system according to Claim 2, characterized in that the equalizing throttle (16, 29) is adjustable.

4. Headlight glass cleaning system according to at least one of the preceding claims, characterized in that the second pressure space (20, 35) is filled with washing fluid (2) and the equalizing throttle (16, 29) is constantly connected to the washing fluid (2) in the washing fluid container (3).

5. Headlight glass cleaning system according to at least one of the preceding claims, characterized in that, in a position of rest of the valve (5, 24), the control piston (17, 31) is held by a spring (compression spring 21, 37) in an end position restricting the first pressure space (19, 34).

6. Headlight glass cleaning system according to Claim 5, characterized in that the length of the spring (compression spring 21, 37) is adjustable by means of an adjusting screw (38).

7. Headlight glass cleaning system according to at least one of the preceding claims, characterized in that the first pressure space (19, 34) is connected to the second pressure space (20, 35) via a throttle (annular gap 36).

8. Headlight glass cleaning system according to Claim 7, characterized in that the throttle is formed by an annular gap (36) surrounding the control piston (17, 31).

9. Headlight glass cleaning system according to at least one of the preceding claims, characterized in that the valve (5, 24) is designed, in a middle position, for simultaneously blocking the connections (6 - 9, 25, 26) leading to the spray nozzles (13).

## Revendications

1. Lave-glace (1) avec une pompe de liquide de lavage (11) refoulant un liquide de lavage d'un réservoir (3) de liquide de lavage à au moins deux buses d'injection (13), et avec une soupape (5, 24), qui est conçue pour changer automatiquement, en fonction du temps, la connexion de la pompe de liquide de lavage (11) d'une buse d'injection à une autre buse d'injection, **caractérisé en ce que** la soupape (5, 24) comprend un piston de commande (17, 31) commandé par la pression de la pompe de liquide de lavage (11) avec un tiroir (22, 32), qui présente, dans la zone des sorties (6 - 9, 25, 26) conduisant aux buses d'injection (13) un alésage (23, 39), qui passe devant les sorties (6 - 9, 25, 26) de la soupape (5, 24) en fonction de la position du piston de commande (17, 31), et réalise ainsi les connexions successives des buses d'injection (13) à la pompe de liquide de lavage (11).

2. Lave-glace selon la revendication 1, **caractérisé en ce que** le piston de commande (17, 31) sépare dans la soupape (5, 24) une première chambre de pression (19, 34) d'une deuxième chambre de pression (20, 35), et un étrangleur de compensation (16, 29) est disposé dans la soupape, la pompe de liquide de lavage (11) avec la première chambre de pression (19, 34) et la deuxième chambre de pression (20, 35) étant connectée par le biais de l'étrangleur de compensation (16, 29) à une chambre sans pression (le réservoir de liquide de lavage 3).

3. Lave-glace selon la revendication 2, **caractérisé en ce que** l'étrangleur de compensation (16, 29) est ajustable.

4. Lave-glace selon au moins l'une des revendications précédentes, **caractérisé en ce que** la deuxième chambre de pression (20, 35) est remplie de liquide de lavage (2) et l'étrangleur de compensation (16, 29) est en communication constante avec le liquide de lavage (2) dans le réservoir de liquide de lavage (3).

5. Lave-glace selon au moins l'une des revendications précédentes, **caractérisé en ce que** le piston de commande (17, 31) est maintenu dans une position de repos de la soupape (5, 24) par un ressort (ressort de pression 21, 37) dans une position d'extrémité limitant la première chambre de pression (19, 34).

6. Lave-glace selon la revendication 5, **caractérisé en ce que** la longueur du ressort (ressort de pression 21, 37) est ajustable avec une vis de fixation (38).

7. Lave-glace selon au moins l'une des revendications précédentes, **caractérisé en ce que** la première chambre de pression (19, 34) est connectée à la deuxième chambre de pression (20, 35) par un étrangleur (passage annulaire 36).

8. Lave-glace selon la revendication 7, **caractérisé en ce que** l'étrangleur est formé par un passage annulaire (36) entourant le piston de commande (17, 31).

9. Lave-glace selon au moins l'une des revendications précédentes, **caractérisé en ce que** la soupape (5, 24) est formée dans une position intermédiaire pour obstruer simultanément les connexions (6 - 9, 25, 26) conduisant aux buses d'injection (13).
